Europäisches Patentamt

European Patent Office

Office européen des brevets

(19)

(11) Publication number: **0 229 683 B1**

# EUROPEAN PATENT SPECIFICATION

(12)

(45) Date of publication of patent specification: **03.04.91**     (51) Int. Cl.⁵: **B60B 11/02**

(21) Application number: **87200066.6**

(22) Date of filing: **16.01.87**

(54) Fastening construction for detachably fastening an extra wheel to a road wheel of a tractor or like vehicle.

(30) Priority: **17.01.86 NL 8600093**

(43) Date of publication of application:
**22.07.87 Bulletin 87/30**

(45) Publication of the grant of the patent:
**03.04.91 Bulletin 91/14**

(84) Designated Contracting States:
**BE DE FR GB NL SE**

(56) References cited:
**EP-A- 0 049 420**
**FR-A- 2 259 706**
**GB-A- 2 096 072**

(73) Proprietor: **Mol, Pieter Krijn**
**Noordzakweg 21**
**NL-4458 RA 's-Heer Arendskerke(NL)**

(72) Inventor: **Mol, Pieter Krijn**
**Noordzakweg 21**
**NL-4458 RA 's-Heer Arendskerke(NL)**

(74) Representative: **van der Beek, George Frans,**
**Ir. et al**
**Nederlandsch Octrooibureau Schevening-**
**seweg 82 P.O. Box 29720**
**NL-2502 LS 's-Gravenhage(NL)**

## Description

The invention relates to a fastening construction for detachably fastening an extra wheel to a road wheel of a tractor or like vehicle, comprising
a threaded spindle,
a plurality of spokes connected to the rim of the extra wheel and maintaining said threaded spindle in a substantially central axial position with respect to the extra wheel,
a nut screwed on said threaded spindle,
a number of approximately L-shaped levers each pivotally connected to a spoke, said levers having at their outer ends a boss and cooperating at their inner ends with the assembly of nut and threaded spindle sothat by rotating one of them the levers are pivoted,
and an angular receiving member connected to the road wheel, each boss, when in the fastening position, engaging in said receiving member.

Such a fastening construction is disclosed in EP-A-0049 420.

The extra wheel may be a so-called cage wheel or a so-called double pneumatic tired wheel consisting in the usual manner of a rim and a pneumatic tire. Both types of extra wheels provide the advantage that the weight of the tractor is distributed over a larger area, sothat the wheels of the tractor will penetrate less deeply into soft ground.

In the known construction the angular receiving member comprises a considerable number (for instance 32) of segments as well as a similar number of radial ribs. Each segment has a conical bore tapering radially outwards. Each bore is intended for taking up one boss of a L-shaped lever. This construction is not suitable for all numbers and mutual distributions of the L-shaped levers. An other disadvantage is that the receiving member is a complicated expensive member.

The invention seeks to provide a fastening construction of the type first defined above avoiding the above disadvantages and avoiding positioning problems.

According to the invention the receiving member is a simple ring directly welded to the rim of the road wheel and having one single recess facing the axis of the road wheel and extending continuously along the entire inner circumference of the ring.

The recess is preferably trapezoidal in shape.

The invention also relates to a road wheel clearly intended for the aforesaid fastening construction, for a tractor or like vehicle, which road wheel is provided with a ring extending around its periphery and having a recess.

The invention will now be explained more fully with the aid of the drawings, in which one example of embodiment is illustrated.

Figure 1 is an axial cross-section of the rims of a tractor wheel and of an extra wheel fastened to it, in which arrangement the fastening construction according to the invention is utilized.

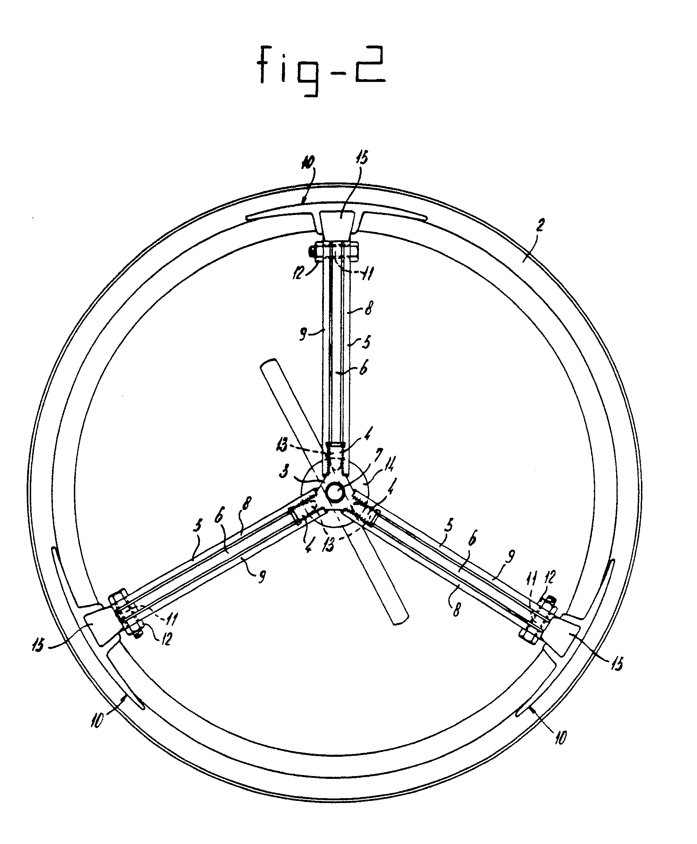

Figure 2 is a side view of the extra wheel.

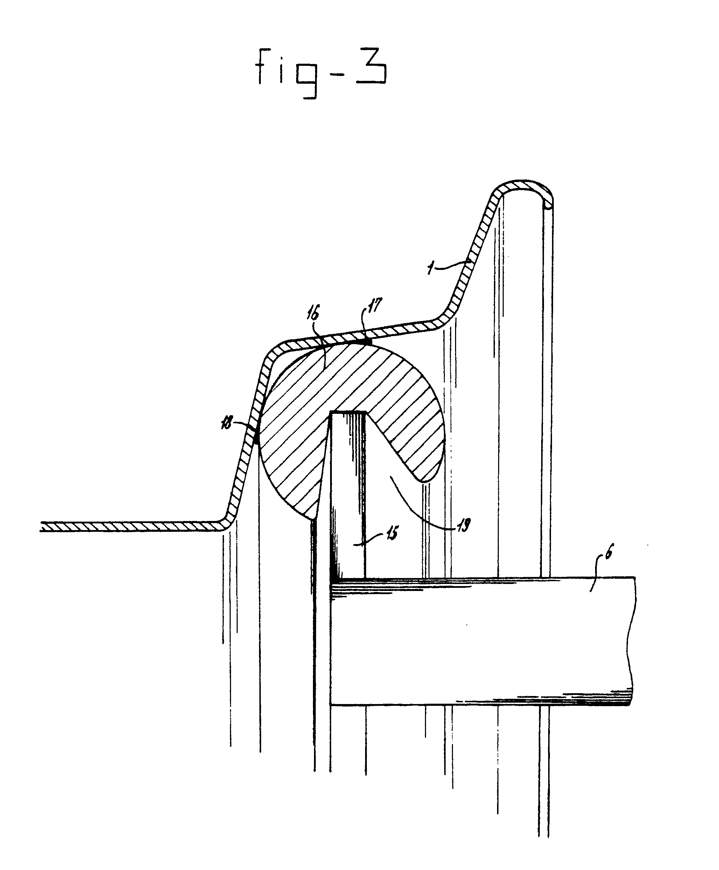

Figure 3 is a section on a larger scale of a part of the road wheel rim.

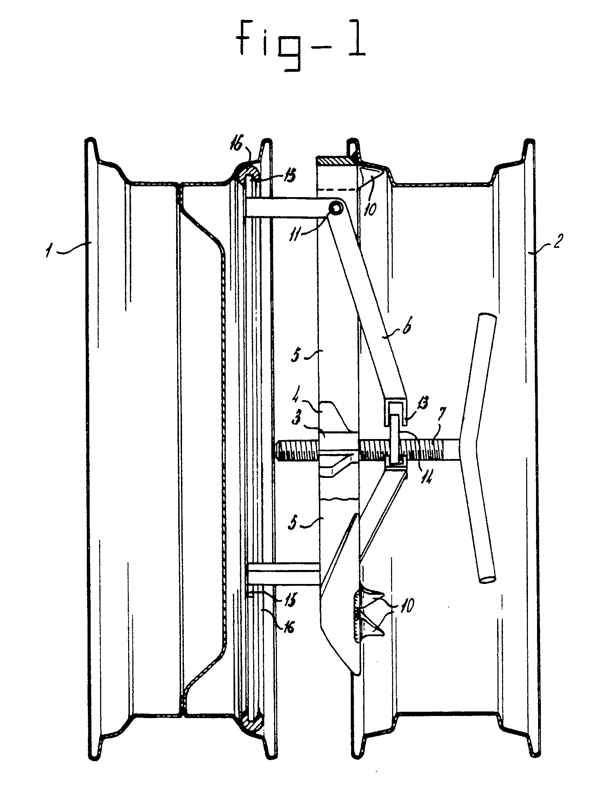

The left-hand side of Figure 1 shows the rim 1 of a wheel of an agricultural tractor, while the right-hand side shows the rim 2 of an extra wheel (a so-called double pneumatic tyred wheel), which is fastened to the tractor wheel rim by a fastening construction which will be described more fully.

The fastening construction comprises a central nut 3 provided with three star wings 4 forming an integral unit, three spokes 5, three substantially L-shaped levers 6, and a threaded pindle 7 screwed through the nut.

Each of the spokes 5 consists of two steel strips 8, 9, which at their inner ends are welded to a wing 4 of the nut 3 and at their outer ends are welded to an attached member 10.

The levers 6 are pivotally mounted on a bolt or pin 11 which passes through openings in a set of spoke strips 8, 9 and, in the example illustrated, is fastened by a nut 12.

The inner end of each lever 6 is provided with a U-section 13 engaging over a ring 14 joined to the spindle 7. At the outer end of each lever 6 is attached a projecting boss 15, which in the fastened position of the wheel 2 shown in Figure 1 engages in a receiving member 16 joined to rim 1.

According to the invention the receiving member 16 is in the form of a steel ring which is welded at 17 and 18 to the rim 1 and in which a trapezoidal recess 19 is formed. The leg of the trapezium facing the extra wheel is somewhat shorter than the other leg, so that the boss can be more easily moved into and out of the recess.

The construction illustrated has the advantage that the ring 16 is suitable for all star arrangements of the levers 6 and that positioning problems no longer occur.

Various modifications are possible within the scope of the invention as defined in the appended claims.

## Claims

1. Fastening construction for detachably fastening an extra wheel to a road wheel of a tractor or like vehicle, comprising
a threaded spindle (7),
a plurality of spokes (5) connected to the rim of the extra wheel (2) and maintaining said threaded spindle (7) in a substantially central axial position with respect to the extra wheel, a nut (3) screwed on said threaded spindle, a number of approximately L-shaped levers (6) each pivotally connected to a spoke (5), said levers having at their outer ends a boss (15) and cooperating at their inner ends with the assembly of nut and threaded spindle sothat by rotating one of them the levers are pivoted, and an angular receiving member (17) connected to the road wheel, each boss (15), when in the fastening position, engaging in said receiving member, characterized in that said receiving (16) is a simple ring directly welded to the rim of the road wheel and having one single recess (19) facing the axis of the road wheel and extending continuously along the entire inner circumference of the ring (16).

2. Fastening construction according to claim 1, characterized in, that the recess (19) is substantially trapezoidal in shape.

3. Road wheel clearly intended for the construction according to claim 1 or 2, said wheel having an angular receiving member (16), characterized in, that the receiving member is a simple ring directly welded to the rim of the road wheel and having one single recess (19) facing the axis of the road wheel and extending continuously along the entire inner circumference of the ring (16).

**Revendications**

1. Construction de fixation pour fixer de façon détachable une roue supplémentaire à une roue routière d'un tracteur ou d'un véhicule analogue,
comportant un arbre fileté (7),
une pluralité de rayons (5) connectés au rebord de la roue supplémentaire (2) et maintenant ledit arbre fileté (7) dans une position axiale substantiellement centrale par rapport à la roue supplémentaire,
un écrou (3) vissé sur ledit arbre fileté,
un certain nombre de leviers (6) approximativement en forme de L et qui sont chacun connectés de façon à pouvoir pivoter à un rayon (5), lesdits leviers ayant à leurs extrémités extérieures une protubérance (15) et coopérant à leurs extrémités intérieures avec l'ensemble d'écrou et d'arbre fileté de telle sorte qu'en faisant tourner l'un d'entre eux on fasse pivoter les leviers,

et un élément récepteur angulaire (17) connecté à la roue routière, chaque protubérance (15) lorsqu'elle est dans la position de fixation, s'engrènant dans ledit élément récepteur,
caractérisée en ce que ledit élément récepteur (16) est un simple anneau directement soudé au rebord de la roue routière et ayant une cavité unique (19) faisant face à l'axe de la roue routière et s'étendant continuellement le long de la totalité de la circonférence intérieure de l'anneau (16).

2. Construction de fixation selon la revendication 1, caractérisée en ce que la cavité (19) a une forme substantiellement trapézoïdale.

3. Roue routière clairement prévue pour la construction selon la revendication 1 ou 2, ladite roue ayant un élément récepteur angulaire (16), caractérisée en ce que l'élément récepteur est un simple anneau directement soudé au rebord de la roue routière et ayant une cavité unique (19) faisant face à l'axe de la roue routière et s'étendant continuellement le long de la totalité de la circonférence intérieure de l'anneau (16).

**Ansprüche**

1. Befestigungskonstruktion zum abnehmbaren Befestigen eines Zusatzrades an einem Straßenrad eines Traktors oder ähnlichen Fahrzeugs, umfassend
eine Gewindespindel (7),
eine Vielzahl von Spindeln (5), die mit der Felge des Zusatzrades (2) verbunden sind und die Gewindespindel (7) in einer im wesentlichen zentralen axialen Position bezüglich des Zusatzrades halten,
eine auf die Gewindespindel geschraubte Mutter (3),
eine Anzahl von näherungsweise L-förmigen Hebeln (6), die jeweils schwenkbar an eine Speiche (5) angelenkt sind, und die Hebel besitzen an ihren äußeren Enden einen Vorsprung (15) und stehen mit ihren inneren Enden in Wirkeingriff mit dem Aufbau aus Mutter und Gewindespindel, so daß bei Drehung eines von diesen die Hebel geschwenkt werden, und ein Winkelaufnahmeteil (16), das mit dem Straßenrad verbunden ist, wobei jeder Vorsprung (15), wenn in der Befestigungsstellung, in Eingriff mit dem Aufnahmeteil steht, **dadurch gekennzeichnet, daß** der Aufnehmer (16) ein einfacher Ring ist, der direkt an die Felge des Straßenrades geschweißt ist und eine einzelne Ausnehmung (19) aufweist, die der Achse des Straßenrades zugewandt ist und sich kontinuierlich entlang des gesamten inneren Umfangs des Rings (16) erstreckt.

2. Befestigungskonstruktion nach Anspruch 1, dadurch gekennzeichnet, daß die Ausnehmung (19) im wesentlichen trapezförmig in der Gestaltung ist.

3. Straßenrad vollständig bestimmt für eine Konstruktion nach Anspruch 1 oder 2, wobei das Rad ein Winkelaufnahmeteil (16) aufweist, dadurch gekennzeichnet, daß das Aufnahmeteil ein einfacher Ring ist, der direkt an die Felge des Straßenrades geschweißt ist und eine einzelne Ausnehmung (19) besitzt, die der Achse des Straßenrades zugewandt ist und sich kontinuierlich entlang des gesamten inneren Umfangs des Rings (16) erstreckt.

# fig-1

fig-2

# fig-3